# EUROPEAN PATENT APPLICATION

(11) **EP 4 052 585 A1**
(43) Date of publication of application: **07.09.2022**
(21) Application number: 21160130.7
(22) Date of filing: 02.03.2021
(51) Int. Cl.: A23J 1/00, A23J 1/14, A23L 11/30, A23L 33/185, A23J 3/14, A23J 3/22

(54) **PROCESS FOR PREPARING PLANT PROTEIN COMPOSITIONS, AND PLANT PROTEIN COMPOSITION OBTAINABLE BY SAID PROCESS**

(71) Applicant: Bühler AG, 9240 Uzwil (CH)
(72) Inventor: Stutzmiller, Stefan, 8964 Friedlisberg (CH); Bou-Habib, George, 8135 Langnau am Albis (CH); Slettengren, Katarina, 8057 Zürich (CH)
(74) Representative: Hepp Wenger Ryffel AG

(57) **Abstract**

The present invention is related to a process for preparing a plant protein-containing composition, said method comprising the steps of wet-milling a protein-containing material so as to obtain a composition with a particle size distribution (PSD) d₉₀ of less than 30 µm; microfiltration of the composition; and ultrafiltration of the composition. The present invention is furthermore related to a plant protein-containing composition obtainable by said process, and to a food product comprising said plant protein-containing composition.

## Description

The present invention is related to a process for preparing plant protein compositions, and plant protein composition obtainable by said process.

Novel food products such as meat substitutes or beverages that are based on vegetable proteins are becoming increasingly important as part of the sustainability trend. However, such food products frequently suffer from specific plant-like flavor or taste, which is experienced as undesirable or unpleasant by the consumer ("a pea-like taste", "beany taste", "green taste" or "a plant-like taste"). For example, green-fatty aroma or astringent and bitter taste of such food products is an obstacle to their acceptance. Also, the characteristics of particulate plant-based protein materials is frequently not optimal, due to grittiness and tendency for phase separation.

There have been described attempts to reduce components in plant protein compositions which are responsible for the above described adverse flavour characteristics.

For example, in WO 2019/238371 A1 a process is described wherein the sensory quality of a composition which contains plant proteins is improved by extraction with a food grade oily composition.

In WO 2007/002450 A1, extraction processes for removing off-flavor precursors utilizing either supercritical carbon dioxide or supercritical carbon dioxide and an organic solvent in order to achieve the protein products with reduced off-flavor are described.

In WO 2019/140363 A1, it is described that ultrafiltration of raw yellow peas helps to remove components that cause undesirable off-flavor. Possible milling before ultrafiltration is mentioned.

In WO 2020/064822 A1, a process for extracting protein isolate is suggested which involves inter alia an ultrafiltration step. Possible wet-milling before ultrafiltration is mentioned.

In WO 2016/015151, a process of producing a pulse protein product with improved flavor is described wherein the pulse protein is first extracted with water to cause solubilization of pulse protein from the protein source and to form an aqueous pulse protein solution, and subsequently is subjected to a concentration step using ultrafiltration.

In WO 2017/143298, a method for producing a mung bean protein isolate with improved flavor is described, wherein an aqueous extract is prepared and the method comprises a step of fractionating and concentrating protein from the extract using filtration such as microfiltration or alternatively ultrafiltration or alternatively ion-exchange chromatography. Wet milling is not mentioned.

None of the above processes is fully satisfactory for providing a plant protein composition with off-flavour and especially astringency characteristics and favourable particle characteristics.

It was the problem of the present invention to provide a process for preparing a plant protein composition with off-flavour and especially astringency characteristics and favourable particle characteristics.

The above problem has been solved by the subject-matter as defined in the claims.

In particular, the present invention is related to a process for preparing a plant protein-containing composition, said method comprising the steps:
a) Wet-milling a plant protein-containing material, having a protein content of more than 20 wt.-%, preferably more than 35 wt.-% and even more preferably more than 50 wt.-% of the entire weight of the material, so as to obtain a composition with a particle size distribution (PSD) d₉₀ of less than 30 µm, preferably less than 10 µm, more preferably less than 2 µm, and especially preferred less than 1 µm;
b) Microfiltration of the composition obtained after step a);
c) Ultrafiltration of the composition obtained after step b).

It has been found that a plant protein-containing composition having favourable off-flavour, and especially favourable astringency and favourable bitterness characteristics, and favourable particle characteristics can be obtained if the above steps of wet-milling, microfiltration and ultrafiltration are successively conducted with a suitable starting material.

By successively performing the above steps, grittiness can be reduced and phase separation can be prevented due to improving the particle size distribution (PSD) of the material. Furthermore, creaminess is enhanced. Moreover, components responsible for adverse flavour (such as aldehydes, ketones, alcohols, pyrazine), as well as components responsible for astringency (such as isoflavones, saponins, tannins, phenolic acids and smaller peptide), as well as salts that can cause soapiness can be successfully removed or at least significantly removed.

According to the present invention, a significant reduction means a reduction of the initial amount of more than 10%, preferably more than 30%, more preferably more than 50% and especially preferred more than 70%.

The plant protein-containing composition can be derived from any suitable plant protein source, in particular selected from the group consisting of legume based protein, cereal based protein, algae based protein, seed and/or nut-based protein, or combinations thereof, for example, plant proteins selected from the group consisting of quinoa protein, buckwheat protein, millet protein, oat protein, rice protein, hemp protein, peanut protein, almond protein, cashew protein, coconut protein, lentil protein, water lentil protein, soy protein, faba bean protein, pea protein, chickpea protein, lupin protein, canola protein, sunflower protein, pumkin seed protein, chia seed protein, watermelon seed protein, flax seed protein, potato protein, micro-algae protein, or combinations thereof. These protein sources can be used as protein containing material in step a) of the process of the invention.

According to the present invention, plant protein-containing compositions are preferred that are based on pea protein.

According to the present invention, protein-containing materials for use as a starting material in the process of the present invention have a protein content of more than 20 wt.-%, preferably more than 35 wt.-% and even more preferably more than 50 wt.-% of the entire dry weight of the material, particularly preferably between 60 % by weight and 90 % by weight. According to the present invention, dry weight means the weight of the material in the dried state.

For example, the protein containing material may be a plant protein isolate. Plant protein isolates are protein enriched fractions obtained from plants, parts of plants, combinations of plants, combinations of parts of plants, or combinations thereof. In a plant protein isolate, the protein content is typically enriched to 80 or more wt.-%, based on the entire amount of the isolate.

According to another embodiment of the invention, the protein containing material may be a plant protein isolate. Plant protein isolates are protein enriched fractions obtained from plants, parts of plants, combinations of plants, combinations of parts of plants, or combinations thereof, wherein enrichment with protein is not as pronounced as in isolates. In a plant protein isolate, the protein content is typically enriched to 50-70 wt.-%, based on the entire amount of the isolate.

Plant protein isolates and concentrates can be prepared by conventional methods known in the art.

The starting protein containing material is first subjected to a wet milling process. According to the present invention, "wet milling" designates a milling process where the material to be milled is suspended in a liquid phase.

According to the present invention, the material to be wet milled, for example peas, are blended with a liquid, optionally under stirring and/or heating. If necessary, the material to be milled may be subjected to conventional preparatory steps such as cleaning, dehulling and comminuting.

The ratio of starting protein containing material and liquid may be adjusted depending on the kind of starting plant protein containing composition. Typically, the ratio of starting protein containing material and liquid is in a range from 1:1 to 1:25 (w/v), preferably 1:2 to 1:10 (w/v).

According to one preferred embodiment of the present invention the liquid used in the wet milling step is water. This is particularly preferred if the starting protein containing material is a concentrate.

According to one preferred embodiment of the present invention the liquid used in the wet milling step is a water-oil mixture. This is particularly preferred if the starting protein containing material is an isolate. A plant protein isolate may not contain a sufficient amount of fat and/or oil for taking up the components to be removed from the plant protein containing composition in the process of the invention. It is thus preferred to use as a blending liquid for the wet-milling step an oil-containing liquid.

According to a preferred embodiment of the invention, the water-oil mixture to be used in the wet milling step contains less than 10 wt.-% oil, more preferably less than 5 wt.-% oil, and especially preferred less than 2 wt.-% oil.

Wet milling is generally known. It can be conducted in conventional milling devices such as a colloid mill, a bead mill, a disintegrator, a grinder, or any other device capable of reducing the particle size of the plant protein containing composition.

According to a preferred embodiment of the present invention, wet milling is conducted with a bead mill. Bead mills are known in the art. In bead mills, solid particles are reduced in size and finely dispersed and wetted out in a liquid phase. Small ceramic, glass or metal beads (also called bead material) are agitated inside the mill chamber to aid particle size reduction through impact and energy input while the dispersion is conveyed through the mill.

The bead material typically has a particle size (diameter) in the range from 0.3 to 2.5 mm, more preferably 0.5 to 1.5 mm, especially preferred 0.6 to 1.0 mm.

According to a preferred embodiment of the present invention, the bead material is SiC (silicium carbide).

According to a preferred embodiment of the invention, the dispersion of plant protein containing composition in the blending liquid is recirculated through the mill, preferably bead mill. The liquid can be recycled, in particular if the liquid is water.

According to a preferred embodiment of the invention, during milling a dry matter content in the mill of 2-30%, preferably 10-30%, more preferably 15-20% is set.

According to a preferred embodiment of the invention, during milling a filling degree in the mill of 60-90%, preferably 65-85% is set.

According to the present invention, after the wet milling step a composition is obtained with a particle size distribution (PSD) d₉₀ of less than 30 µm, preferably less than 10 µm, more preferably less than 2 µm, and especially preferred less than 1 µm.

The term "particle size distribution" is well-known. Particle size distribution defines the relative amount (typically by mass) of particles that are present in a sample according to size. For example, the so-called median value D₅₀ defines the particle size where half of the particles in the sample lie above this value, and half of the particles in the sample lie below this value. More specifically, a D₅₀ value of 10 µm defines that 50% of the particles in the sample have a size of less than 10 µm, and 50% of the particles in the sample have a size of more than 10 µm. Similarly, a D₉₀ defines the particle size where 10% of the particles in the sample lie above this value, and 90% of the particles in the sample lie below this value.

According to the present invention, after the wet milling step a composition is obtained with a particle size distribution d₉₀ of less than 30 µm. This means that 90% of the plant protein particles after the wet milling step have a particle size of less than 30 µm.

It has been found that during wet-milling the viscosity of the mixture increases by about 10-50%, preferably 20-40%. Also, it has been found that starch granules are significantly broken down. In a composition with more than 95% of present starch granules being intact, more than 10%, preferably more than 20% and especially preferred more than 50% of the initially intact starch granules will be degraded during the wet-milling. This imparts favourable properties on the final plant protein-containing composition.

The particle size distribution can be determined by conventional methods, such as laser scattering, dynamic light scattering or image analysis. An example of a commercially available device for determining particle size distributions is the Malvern MasterSizer.

The composition obtained after the wet milling step is subjected to a microfiltration step. Microfiltration is a conventional method that is characterized by the pore size of the filter membrane employed. Typically, microfiltration is conducted using a membrane having a pore size of around 0.1 µm. However, the pore size can also be somewhat larger or smaller, for example from about 0.1 to about 1 µm. In microfiltration, the cut-off (i.e. the maximal size of particles able to penetrate through the membrane) is typically above 0.1 µm.

Microfiltration can be conducted with increased pressure, so that for example a differential pressure between inlet and outlet of the filter device of 0.1 to 10 bar can be set.

Microfiltration can be performed using conventionally known and available filter devices.

The composition obtained after the microfiltration step is subjected to an ultrafiltration step. Ultrafiltration is a conventional method that is also characterized by the pore size of the filter membrane employed. Typically, ultrafiltration is conducted using a membrane having a pore size below 0.1 µm, typically between 0.002 µm to about 0.1 µm (2 nm to 100 nm). In ultrafiltration, the cut-off (i.e. the maximal size of particles able to penetrate through the membrane) is typically below 0.1 µm, or in terms of the molecular weight retained by the ultrafiltration membrane of about 10,000 to about 1,000,000 Daltons. Ultrafiltration can be conducted with increased pressure, so that for example a differential pressure between inlet and outlet of the filter device of 0.1 to 10 bar can be set.

Ultrafiltration can be performed using conventionally known and available filter devices.

After the ultrafiltration step, the thus obtained plant protein containing composition may be subjected to an additional step d) of concentrating the composition obtained after the ultrafiltration step c).

Steps of concentrating a composition are known. According to a preferred embodiment of the present invention, the concentrating step involves another ultrafiltration.

The above steps can be preferably conducted continuously, i.e. with no significant interruption between the individual steps. Alternatively, after one or more steps of the process of the invention the process may be interrupted, and the obtained intermediate composition may be stored in a suitable container.

In the prior art, it has so far not been suggested to subject a plant protein containing composition to wet milling followed by microfiltration and ultrafiltration. According to the present invention, it has been found that only if these three steps are performed in the indicated sequence, an optimal removal of components responsible for adverse flavor and/or taste, especially bitterness, and astringency can be achieved along with a favorable modification of the particle characteristics.

Thus, the present invention is also related to a plant protein-containing composition which is obtainable by a process of the present invention as described herein.

Said plant protein-containing composition preferably is a pea protein-containing composition.

The plant protein-containing composition obtainable by the process of the present invention is not only characterized by its protein content derived from the starting material. It is furthermore characterized by a small particle size distribution (PSD) d₉₀ of less than 30 µm, preferably less than 10 µm, more preferably less than 2 µm, and especially preferred less than 1 µm, and by favourable off-flavour and especially astringency characteristics, reduced or eliminated bitterness, and favourable particle characteristics. Moreover, due to the favourably small particle size of the particles in the composition, grittiness can be reduced and phase separation can be prevented. Furthermore, creaminess is enhanced.

Furthermore, components responsible for adverse flavour (such as aldehydes, ketones, alcohols, pyrazine), as well as components responsible for astringency (such as isoflavones, saponins, tannins, phenolic acids and smaller peptide), as well as salts that can cause soapiness can be successfully removed or at least significantly removed.

According to a preferred embodiment of the invention, the amounts of hexanal which is significantly responsible for adverse flavour, can be reduced to an amount of 1-15%, preferably 1-10% of the amount of hexanal in the starting protein containing material.

According to another preferred embodiment of the invention, the fat content of the plant protein containing composition is 0,1-3%, preferably 2-3%, more preferably less than 1% of the entire weight of the plant protein containing composition.

According to another preferred embodiment of the invention, the-content of intact starch granules in the plant protein containing composition has been reduced by more than 10%, preferably more than 20% and especially preferred more than 50% of the initially intact starch granules in a composition with more than 95% of present starch granules being intact. This imparts favourable properties on the plant protein-containing composition.

The plant protein-containing composition obtainable by the process of the present invention can be directly processed further to produce a food product. Alternatively, it may be subjected to processes like drying or concentration through evaporation before being processed further to produce a food product.

Thus, the present invention is also related to a food product, comprising a plant protein-containing composition according to the present invention.

According to a preferred embodiment, the food product is a beverage. Beverages based on a plant protein source and their productions are known. For this embodiment, the particle size distribution of the plant protein-containing composition according to the present invention that is obtainable by the method described herein is particularly favourable. The particle size distribution of the plant protein-containing composition according to the present invention is determined by the particle size distribution (PSD) d₉₀ of less than 30 µm, preferably less than 10 µm, more preferably less than 2 µm, and especially preferred less than 1 µm, obtained with the wet milling step, and by the cut-off parameters used in the subsequent microfiltration and ultrafiltration steps in which respectively larger particles are removed.

According to another preferred embodiment, the food product is a meat analogue product.

A meat analogue product (or ("meat alternative") is a protein-containing texturate having a texture, color and haptic characteristics similar to a meat product they should replace. Meat analogue products and their production are known and described, for example, in WO-2021/032866 A1 by the applicant. For example, the plant protein-containing composition according to the present invention may be subjected to a specific extrusion process as described in WO-2021/032866 A1 by the applicant.

The specific extrusion process as described in WO-2021/032866 A1 for the production of protein-containing foamed food products comprises the following steps:
a) metering raw materials into an extruder, wherein at least one raw material is a plant protein containing composition according to the present invention,
b) mixing the raw materials in the extruder to produce a mixture,
c) extruding the mixture to produce an extrudate, wherein the solids content of the extrudate is in the range from 20 % to 60 %, preferably in the range from 30 % to 50 %,
d) leading the extrudate out of the extruder through a cooling die while cooling the extrudate to a temperature of less than 100 °C,
wherein pores are formed in a controlled manner in the extruder by providing a gas so as to provide after step d) a foamed product having a protein content in the range from 15-30 wt.-%, preferably 19-23 wt.-% and a liquid content, preferably water content, of 45-70 wt.-%, preferably 55-65 wt.-%.

At least one gas is thus introduced into the extrudate during the extrusion in step c). This is usually done through a feed opening of the extruder, which is connected to a gas container (such as a pressure bottle) and allows a controlled introduction of gas into the extruder (for example, via a valve). Examples of gases which can be used according to the invention in this embodiment are CO₂, N₂, N₂O, NH₃ or SO₂, preferably CO₂ or N₂. The gas can be introduced in the gaseous state or alternatively as a liquefied gas.

The resulting foamed product has a protein content in the range from 15-30 wt.-%, preferably 19-23 wt.-%, and a liquid content, preferably water content, of 45-70 wt.-%, preferably 55-65 wt.-%. Preferably, the resulting foamed product has homogeneously distributed pores having a diameter of approximately 0.1-1 mm with a narrow size distribution, and more preferably additionally homogeneously distributed closed cavities.

The dispersed gas fraction and the gas bubble size / size distribution have a quantitative influence on the texture properties (for example, "bite and chewing properties" such as tenderness, hardness, chewability) and make it possible to adapt these sensory properties by adapting the structural parameters to the dispersed gas phase. It is assumed that an increase in the gas fraction (up to a matrix-specific critical value) and a reduction in the bubble size (with a constant gas volume fraction) lead to a stiffening of the structure. This leads to an increase in hardness, which is expressed by the maximum force required to start the structural break when cutting/biting, but increases the deformation required for the break and thus influences the chewability. Accordingly, the foaming of the matrix expands the spectrum of tools for adapting, for example, meat-analog bite/chewing properties from chicken to beef and beyond.

The method is conducted at a temperature where denaturation of the proteins present in the raw material takes place. Also, the method is conducted at a temperature where the starch crystals melt ("gelatinization"). In the extruder a temperature is applied which is, for example, in the range from 80 °C to 180 °C, preferably in the range from 120 °C to 170 °C, particularly preferably in the range from 130 to 160 °C.

With this method, protein-containing foamed food products (that is, foods having a protein content of more than 50 % dry weight) can be produced which correspond, for example, to meat products in their texture, color and bite, more than protein-containing foods from the prior art. However, also other foamed protein-containing food products (having a protein content of more than 50 % dry weight) can be provided. For example, mousse-like food products with a higher structural stability than real mousse can be obtained.

Protein-containing food products produced using the introduction a gas typically have a maximum overrun (that is, a height exceeding the height of the extruder outlet and thus an increased volume of the sample) of 150 %, preferably 100 %, and/or homogeneously distributed pores having a diameter of approximately 0.1-0.3 mm with a narrow size distribution. According to the present invention, "narrow size distribution" means that the diameter of at least 80%, preferably at least 90% the individual pores only deviates by 0,1-10%, preferably 0,2-5%, from the values indicated above.

The average area of a pore or a cavity formed by several interconnected pores is 21'292 ± 36'110 µm² with an average minimum and maximum diameter of 125 ± 73 µm and 239 ± 153 µm, respectively. The pores and the pore distribution can be analyzed by microscopy or x-ray tomography, as known in the art.

The color of the protein-containing foamed food product produced thus produced is significantly lighter than that of comparable protein-containing food produced without foaming. The color is measured using a conventional spectrophotometer with SCI (Specular Component Included). The sample to be measured must have a sufficiently thick layer so that no light is transmitted through the sample material and the measuring opening is completely covered with sample material. Reflection measurements are performed by means of a d/8° measurement geometry and with daylight (D65). L*, a*, b*, and C* values are determined. The L* value indicates the brightness, while a positive a* value indicates the color red. A positive b* value formulates the yellowness of the material. The chroma is represented by means of the C* value.

The (synthetic) protein-containing food thus produced is distinguished by an L* value which deviates from the L* value of a reference meat product by no more than 20 %, preferably no more than 15 %. Depending on the area of application, the meat product used as a reference is selected from known meat products such as chicken, pork, beef or lamb. It should be noted that an L* value that is similar to an L* value of a reference meat product in isolation does not render a food product an alternative meat product. In order to qualify as an alternative meat product, the food product also has to meet the conditions as to texture and porosity described herein. For example, a snack product having an L* value that is similar to an L* value of a reference chicken product does not qualify as alternative meat product, for the obvious reason that texture and porosity of a snack product is not comparable to texture and porosity of the reference chicken product.

The protein-containing foamed food product thus produced is further characterized by a fibrillar, porous, longitudinally oriented and cross-linked structure. Upon drying, the individual layers do not fall apart from one another, but remain linked to one another.

The protein-containing foamed food product thus produced is further distinguished by a porous structure having closed cavities and homogeneous distribution of the cavities. The cavities preferably have a diameter of 100-300 µm with a normal deviation in the range of 50-70 %.

The protein-containing foamed food products thus produced are characterized by a specific texture. These products have longitudinally oriented layers that are positioned around a central cavity. Preferably, these layers are not placed very compactly alongside one another, but are interrupted by small cavities. This results in a porous structure. According to a preferred embodiment, the foamed food products when drying out exhibits clearly recognizable individual layers that do not fall apart from one another, but are linked to one another at some points. The fibrillar structure is oriented longitudinally, corresponding to the die used in the manufacturing process.

The protein-containing foamed food products thus produced are characterized by a maximum force (peak force) which is required to break up the structure of the products during cutting or biting, which is in the range from 10-50 N, preferably 15-40 N, more preferably 12-20 N, in longitudinal direction (F_{L}) and in the range from 10-90 N, preferably 15-70 N, and more preferably 15-50 N, in transversal direction (F_{T}).

The maximum force can be determined using a Warnzer-Brazler blade set with a "V" slot blade (https://textureanalysis-professionals.blogspot.com/2014/12/texture-analysis-in-action-blade-set.html). This analysis helps to quantify the cutting or biting property of the product. All texture analysis measurements are made at room temperature of 25°C.

The protein-containing foamed food products thus produced are cut transversally (right-angled to the flow direction of the extruded strand (F_{T}) as well as cut parallel to the flow direction of the extruded strand (F_{L}), and the respective maximum force (peak force) can be determined using the above Warnzer-Brazler blade set and expressed in Newtons (N).

Generally, for the protein-containing foamed food products thus produced the F_{L} values are lower than their F_{T} values, so that the protein-containing foamed food products according to the present invention exhibit an anisotropy index of >1, preferably > 2, especially preferred in the range from 2-2.5, even more especially preferred between 2.1-2.4.The protein-containing foamed food product thus produced can be used as a basis (matrix) for cell cultivation because its porous structure has a beneficial effect on the growth of cells and the protein-containing foamed food product can also contain nutrients or other components suitable for cell cultivation, which can be e.g. provided in the pores of the foamed food product.

In contrast to bread dough, the protein-containing foamed food products thus produced show a pronounced anisotropy with respect to their mechanical properties, i.e. their F_{T} and F_{L} values. The anisotropy index can be calculated from the ratio of the F_{T} and F_{L} values (A=F_{T}/F_{L}) and represents a measure of the fibrousness of the product.

The present invention will now be described in more detail with reference to non-limiting examples and drawings.

It is shown:

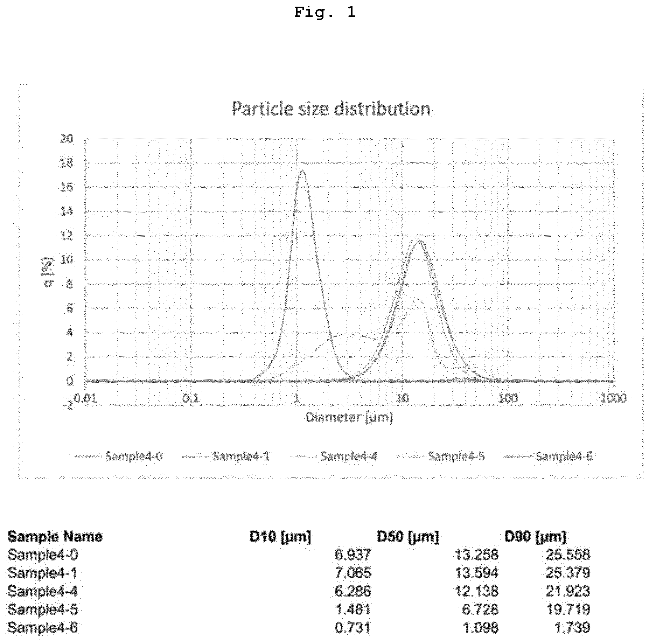

- Fig. 1: a diagram showing the particle size distributions of various samples

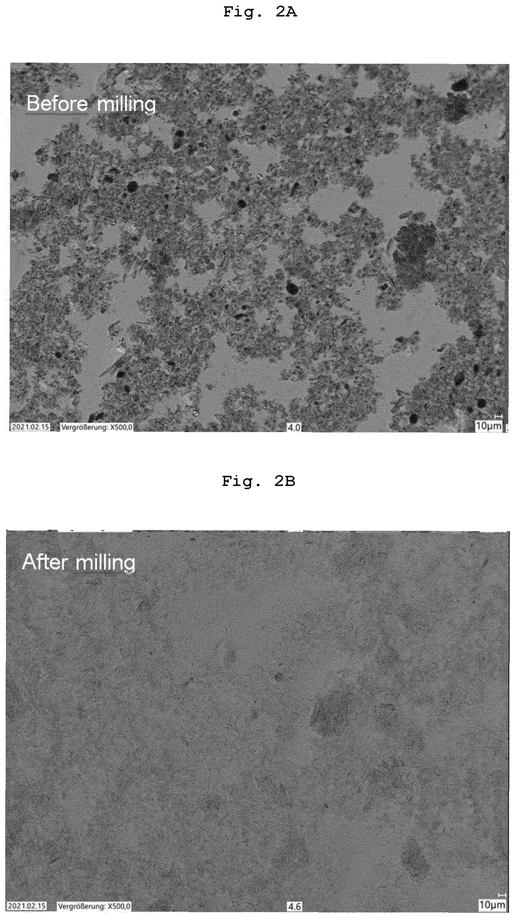

- Fig. 2A: a photograph of a pea protein concentrate (stained with methylene blue) before the process of the invention
- Fig. 2B: a photograph of a pea protein concentrate (stained with methylene blue) after the process of the invention

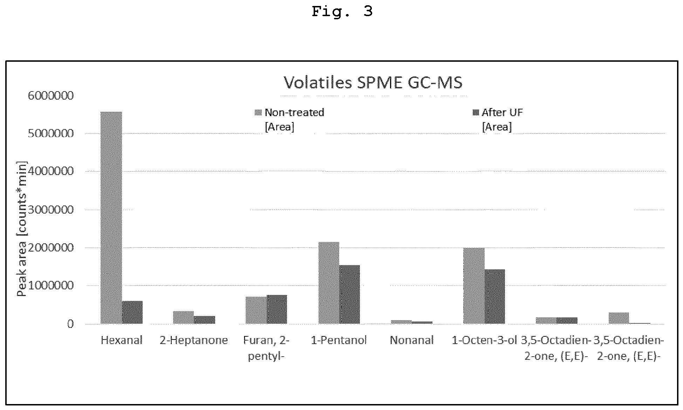

- Fig. 3: a diagram showing the reduction of a selection of off-flavour compounds by the process of the invention

## Claims

1. A process for preparing a plant protein-containing composition, said method comprising the steps:
a) Wet-milling a plant protein-containing material, having a protein content of more than 20 wt.-%, preferably more than 35 wt.-% and even more preferably more than 50 wt.-% of the entire dry weight of the material, so as to obtain a composition with a particle size distribution (PSD) d₉₀ of less than 30 µm, preferably less than 10 µm, more preferably less than 2 µm, and especially preferred less than 1 pm;
b) Microfiltration of the composition obtained after step a) ;
c) Ultrafiltration of the composition obtained after step b) .

2. The process according to claim 1, **characterized in that** in step a) wet-milling is conducted in water.

3. The process according to claim 1, **characterized in that** in step a) wet-milling is conducted in a water-oil mixture.

4. The process according to claim 3, **characterized in that** the water-oil mixture contain less than 10 wt.-% oil, more preferably less than 5 wt.-% oil and especially preferred less than 2 wt.-% oil.

5. The process according to any of the preceding claims, **characterized in that** the process comprises an additional step d) of concentrating the composition obtained after step c).

6. The process according to claim 5, **characterized in that** step d) involves ultrafiltration.

7. The process according to any of the preceding claims, **characterized in that** the plant protein-containing material is a pea protein concentrate.

8. The process according to any of the preceding claims, **characterized in that** the plant protein-containing material is a pea protein isolate.

9. A plant protein-containing composition, obtainable by a process according to any of claims 1 to 6.

10. The plant protein-containing composition according to claim 9, **characterized in that** said composition is a pea protein-containing composition.

11. A food product, comprising a plant protein-containing composition according to claim 9 or 10.

12. The food product according to claim 11, **characterized in that** said plant protein-containing composition is a pea protein-containing composition.

13. The food product according to claim 11 or 12, **characterized in that** said food product is a beverage.

14. The food product according to claim 11 or 12, **characterized in that** said food product is a meat analogue product.
